# EUROPEAN PATENT APPLICATION

(11) **EP 4 667 328 A1**
(43) Date of publication of application: **24.12.2025**
(21) Application number: 25181631.0
(22) Date of filing: 10.06.2025
(51) Int. Cl.: B62D 25/08, B62D 29/00, B62D 25/20

(54) **VEHICLE BODY STRUCTURE, MOLD TO MOLD BODY STRUCTURE AND METHOD OF MOLDING BODY STRUCTURE**

(30) Priority: 17.06.2024 JP 2024097314
(71) Applicant: MAZDA MOTOR CORPORATION, Hiroshima 730-8670 (JP)
(72) Inventor: SHIMANAKA, Tsuneki, Aki-gun, Hiroshima, 730-8670 (JP)
(74) Representative: Müller-Boré & Partner Patentanwälte PartG mbB

(57) **Abstract**

A front side frame (60) that is integrally molded by casting has: a horizontal plate portion (63); a first vertical plate portion (64) that continues from one end portion in a width direction of the horizontal plate portion (63) and extends to both sides in a thickness direction of the horizontal plate portion (63); and a second vertical plate portion (65) that continues from another end portion in the width direction of the horizontal plate portion (63) and extends to both of the sides in the thickness direction of the horizontal plate portion (63). The horizontal plate portion (63) has a bulging portion (63a).

## Description

### [Technical Field]

The present invention relates to a body structure of an automobile, for example. The present invention also relates to a mold configured to mold a body structure and a method of molding a body structure.

### [Background Art]

For example, a dash panel is provided in a front portion of an automobile, and a cabin and a space on a front side of the cabin are divided by the dash panel. Paired front side frames, each of which extends forward, are fixed to both left and right sides of the dash panel, respectively. In a general automobile, the front side frame is formed by combining plural pressed steel sheets and has a hollow structure. However, a front side frame that does not have the hollow structure is also known. A front side frame disclosed in Patent Literature 1 is an example thereof, and this front side frame is formed by a cast member that is made of an aluminum alloy and is integrally provided with a front damper housing.

### [Citation List]

### [Patent Literature]

[Patent Literature 1] WO 2015/001928

### [Summary]

### [Technical Problem]

By the way, in the event of a frontal collision of the automobile, a large impact load is input to the front side frame from the front. There is a demand for suppressing deformation of the cabin by receiving the impact load with the front side frame at this time and thus improving occupant protection performance.

It is considered that, when the front side frame has the hollow structure as in the conventional general automobile, the structure is less likely to be bent by the impact load from the front, and thus the impact load can sufficiently be received by the front side frame.

Meanwhile, in the case where the front side frame is formed by the cast member as in Patent Literature 1, while there is an effect of reducing the number of components, it is difficult to obtain a hollow structure from a front end to a rear end of the front side frame due to a mold structure. For this reason, it is likely to be bent by the impact load from the front. When the front side frame is bent by the impact load from the front, the front side frame cannot sufficiently receive the impact load.

The present disclosure has been made in view of the above problems, and an object thereof is to improve rigidity of a cast vehicle frame.

### [Solution to Problem]

The above object is achieved by the invention as defined in independent claims. Particularly, a body structure includes a vehicle frame that is integrally or unitarily molded by casting and extends in a predetermined direction can be assumed. When the vehicle frame is viewed along the predetermined direction, the vehicle frame has: a horizontal plate portion; a first vertical plate portion that continues from one end portion in a width direction of the horizontal plate portion and extends to both sides in a thickness direction of the horizontal plate portion; and a second vertical plate portion that continues from another end portion in the width direction of the horizontal plate portion and extends to both of the sides in the thickness direction of the horizontal plate portion. The horizontal plate portion has a bulging portion that bulges in the thickness direction of the horizontal plate portion and extends in the predetermined direction.

According to the invention, since the vehicle frame has a cross-sectional shape close to an H-shape, it is less likely to be bent with respect to a load in the predetermined direction. In addition, since the bulging portion that bulges in the thickness direction is formed in the horizontal plate portion, the bulging portion acts like a hollow rib. As a result, compared to a case of a flat horizontal plate portion, it is less likely to be bent. From the above, when an impact load is applied to the vehicle frame in an extending direction of the vehicle frame, the vehicle frame is less likely to be bent.

The bulging portion may integrally or unitarily be molded with a rib that protrudes in a bulging direction and extends in the width direction of the horizontal plate portion. In addition, a distal end portion in the bulging direction of the bulging portion may integrally or unitarily be molded with a distal end side bead portion that protrudes in the bulging direction and extends in the predetermined direction. That is, by integrally or unitarily molding the rib and the distal end side bead portion to the vehicle frame, it is possible to improve rigidity of the vehicle frame without causing an increase in the number of components. In addition, by appropriately setting positions and shapes of the rib and the distal end side bead portion, it is possible to improve rigidity of a necessary portion of the vehicle frame as much as necessary.

The bulging portion may have an inclined portion that is inclined and extends with respect to the horizontal plate portion in a manner to approach the one end portion in the width direction of the horizontal plate portion toward a proximal end portion in a bulging direction. In this case, at an intersection point between the inclined portion and the horizontal plate portion, a proximal end side bead portion that protrudes in an opposite direction to the bulging direction and extends in the predetermined direction can integrally be molded. Also, with this proximal end side bead portion, it is possible to improve the rigidity of the vehicle frame without causing the increase in the number of the components.

The vehicle frame is arranged with the predetermined direction being a vehicle front-rear direction (or a vehicle longitudinal direction) on each of a right side and a left side of a body front portion. The body structure may include a coupling portion that extends from a rear portion of the vehicle frame on the right side to a rear portion of the vehicle frame on the left side. In this case, since the vehicle frame on the right side, the vehicle frame on the left side, and the coupling portion are integrally molded by casting, it is possible to increase overall rigidity of the body front portion while reducing the number of the components.

The vehicle frame on the right side and the vehicle frame on the left side may each be formed such that a dimension in a left-right direction (particularly a left-right direction of a vehicle or an automobile) becomes longer toward the rear. That is, rear portions of the vehicle frame on the right side and the vehicle frame on the left side can each be a cone-shaped portion. In this case, the coupling portion is formed to extend from a left portion in the rear portion of the vehicle frame on the right side to a right portion in the rear portion of the vehicle frame on the left side. In this way, it is possible to reduce a length of the coupling portion in the left-right direction and thus to sufficiently increase strength and the rigidity at the time of coupling.

In the horizontal plate portion, a water drain hole for discharging water that is accumulated on an upper surface of the horizontal plate portion to a lower side of the horizontal plate portion may be formed in a manner to penetrate the horizontal plate portion in the thickness direction. That is, when the vehicle frame is provided to extend in a vehicle front-rear direction, it is considered that rainwater or water at the time of car washing is accumulated on the upper surface of the horizontal plate portion of the vehicle frame. However, with this configuration, water that is accumulated on the upper surface of the horizontal plate portion can be drained by the water drain hole.

The body structure may include a dash panel that divides a cabin and a front space on a body front side of the cabin. In this case, the rear portion of the vehicle frame on the left side and the rear portion of the vehicle frame on the right side can be fixed to the dash panel. In addition, the rear portion of at least one of the vehicle frame on the left side or the vehicle frame on the right side can be formed to have a hollow portion that is opened rearward. In addition, an inner wall portion in a vehicle width direction of the hollow portion can be formed with an insertion hole through which a steering shaft that is arranged to extend from the cabin to the front space is inserted. That is, by making the rear portion of the vehicle frame that is fixed to the dash panel hollow, a portion of the vehicle frame that is fixed to the dash panel is enlarged, and thus fixing strength of the vehicle frame to the dash panel is increased. In this case, since the insertion hole is formed in the inner wall portion in the vehicle width direction of the hollow portion to insert the steering shaft therethrough, it is possible to maintain a layout of the steering shaft capable of realizing an intended driving position.

Formation positions of the horizontal plate portion and the bulging portion can be set such that a centroid of a cross section of the vehicle frame in a direction orthogonal to the predetermined direction is located at a center of a rectangle that can be obtained by connecting one end portion of the first vertical plate portion, another end portion of the first vertical plate portion, one end portion of the second vertical plate portion, and another end portion of the second vertical plate portion. In this way, when a load is input to the vehicle frame in the predetermined direction (axial direction or the vehicle front-rear direction), the vehicle frame can easily be buckled and deformed without being bent, and thus the load can be received by the vehicle frame.

### [Advantageous Effects]

As it has been described so far, since the vertical plate portions are provided in both end portions of the horizontal plate portion, respectively, and the bulging portion that bulges in the thickness direction is formed in the horizontal plate portion, it is possible to improve the rigidity of the cast vehicle frame.

### [Brief Description of Drawings]

[FIG. 1] FIG. 1 is a side view of an automobile that has a body structure according to an embodiment of the present invention.
[FIG. 2] FIG. 2 is a plan view of the body structure.
[FIG. 3] FIG. 3 is a bottom view of the body structure.
[FIG. 4] FIG. 4 is a perspective view of a front cast member.
[FIG. 5] FIG. 5 is an enlarged view of a right portion of the front cast member.
[FIG. 6] FIG. 6 is a cross-sectional view that is taken along line VI-VI in FIG. 5.
[FIG. 7] FIG. 7 is a cross-sectional view that is taken along line VII-VII in FIG. 5.
[FIG. 8] FIG. 8 is a rear view of the front cast member.
[FIG. 9] FIG. 9 is a cross-sectional view that is taken along line IX-IX in FIG. 4.
[FIG. 10] FIG. 10 is an enlarged view of a section B in FIG. 7.
[FIG. 11] FIG. 11 is a view illustrating a centroid position of a cross section.
[FIG. 12] FIG. 12 is a cross-sectional view of a front side frame according to a first modified example of the embodiment.
[FIG. 13] FIG. 13 is a cross-sectional view of a front side frame according to a second modified example of the embodiment.

### [Description of Embodiments]

A detailed description will hereinafter be made on an embodiment of the invention with reference to the drawings. It should be noted that the following description of the preferred embodiment is merely illustrative in nature and is not intended to limit the invention, application subjects thereof, or application thereof.

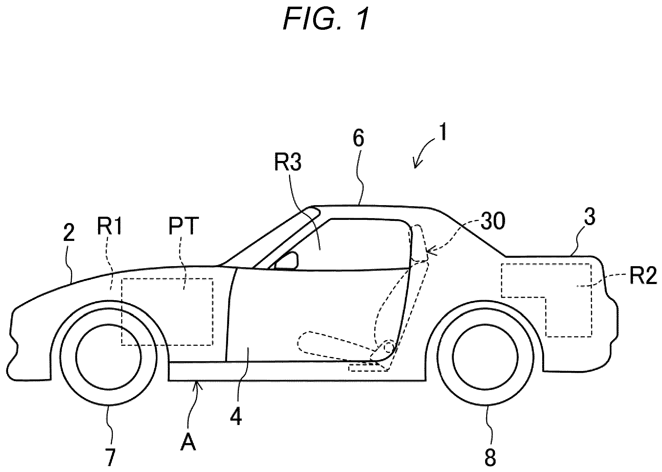

FIG. 1 is a side view of a vehicle, particularly an automobile 1, that has a body structure A according to the embodiment of the invention. In the description of this embodiment, a vehicle front side will simply be referred to as "front", a vehicle rear side will simply be referred to as "rear", a vehicle right side will simply be referred to as "right", and a vehicle left side will simply be referred to as "left". A vehicle left-right direction is a vehicle width direction.

The automobile 1 is a passenger automobile, for example, and may be an automobile of a coupe type, a hatchback type, or a sedan type, for example. The automobile 1 may be an automobile that is equipped with an internal combustion engine that generates a driving force transmitted to drive wheels, may be an electric vehicle that is equipped with a travel motor that generates a driving force transmitted to drive wheels, or may be a hybrid vehicle that generates a driving force transmitted to drive wheels by an internal combustion engine and a driving force generation motor. The internal combustion engine and/or the motor constitute a powertrain PT.

A bonnet hood 2 may be provided in a front portion of the automobile 1. A front space R1 in which the powertrain PT is mounted is provided below the bonnet hood 2 when necessary.

A rear hood 3 may be provided in a rear portion of the automobile 1. A rear space R2 capable of accommodating baggage and the like may be provided below the rear hood 3.

Instead of mounting the powertrain PT in the front space R1, a powertrain (not illustrated) may be mounted in the rear space R2. In this case, the front space R1 can be used as a space for accommodating the baggage and the like. Alternatively, the powertrain may be mounted in both the front space R1 and the rear space R2.

A left door 4 and a right door (not illustrated) are openably and/or closably provided in a left portion and a right portion of the automobile 1, respectively. The body structure A of the automobile 1 may also include front wheels 7 and rear wheels 8 on left and right sides. At least one of the front wheel 7 and/or the rear wheel 8 can be a drive wheel.

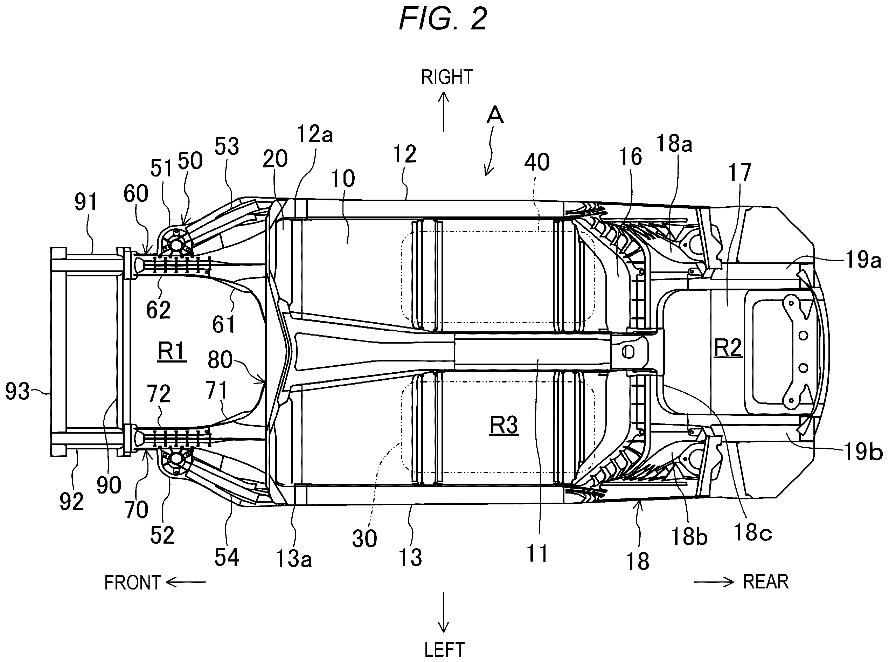

A cabin R3 as e.g., a living space for an occupant is provided between the front space R1 and the rear space R2. As illustrated in FIG. 2, the body structure A of the automobile 1 may include: a floor panel 10 that forms a floor surface of the cabin R3; and a dash panel 20 that forms a front wall of the cabin R3. The body structure A may also include: an inclined panel 16 that extends upward from a rear end portion of the floor panel 10 and is inclined rearward toward the above; and/or a rear panel 17 that extends rearward from an upper end portion of the inclined panel 16.

A rear cast member 18 that is integrally or unitarily molded by casting is provided above the inclined panel 16. The rear cast member 18 has a right rear wheel house 18a, a left rear wheel house 18b, and an intermediate portion 18c that connects the right rear wheel house 18a and the left rear wheel house 18b. The right rear wheel house 18a, the left rear wheel house 18b, and the intermediate portion 18c can be obtained by, for example, integrally or unitarily molding an aluminum alloy by a die casting method.

A front end portion of a right rear frame 19a that extends rearward may be connected to a rear portion of the right rear wheel house 18a. A front end portion of a left rear frame 19b that extends rearward may be connected to a rear portion of the left rear wheel house 18b. The rear panel 17 may be provided to connect the right rear frame 19a and the left rear frame 19b.

A tunnel portion 11 that bulges upward and extends in a front-rear direction may be formed in a central portion of the floor panel 10 in the left-right direction. The body structure A may further include: a right side sill 12 that extends in the front-rear direction along a right edge of the floor panel 10; and a left side sill 13 that extends in the front-rear direction along a left edge of the floor panel 10.

A right hinge pillar 12a that extends upward may be provided in a front portion of the right side sill 12. The right hinge pillar 12a is a member that supports the right door. A left hinge pillar 13a that extends upward may be provided in a front portion of the left side sill 13. The left hinge pillar 13a is a member that supports the left door 4.

A front end portion of the tunnel portion 11 may be located in a front end portion of the floor panel 10, and a rear end portion of the tunnel portion 11 may be located in a rear end portion of the floor panel 10. Thus, the tunnel portion 11 has a shape that continuously extends from the front end portion to the rear end portion of the floor panel 10.

For example, the automobile 1 is a right-hand drive vehicle. Thus, the body structure A may include a passenger seat 30 as a left seat (seating) and a driver's seat 40 as a right seat (seating) on a left side and a right side of the tunnel portion 11 on the floor panel 10, respectively.

Particularly, the passenger seat 30 is provided on the left side of the tunnel portion 11 on the floor panel 10, and the passenger seat 30 is disposed between the tunnel portion 11 and the left side sill 13. The driver's seat 40 is provided on the right side of the tunnel portion 11 on the floor panel 10, and the driver's seat 40 is disposed between the tunnel portion 11 and the right side sill 12. Thus, the passenger seat 30 and the driver's seat 40 are arranged side by side in the left-right direction in a manner to sandwich the tunnel portion 11. Here, the automobile 1 may be a left-hand drive vehicle. In this case, the driver's seat 40 may be provided on the left side, and the passenger seat 30 may be provided on the right side. Further, a rear seat may be provided behind the driver's seat 40 and the passenger seat 30.

The dash panel 20 may be a member that extends upward and in the left-right direction from the front end portion of the floor panel 10 and that divides the cabin R3 and the front space R1 located on the front side of the cabin R3. The front end portion of the tunnel portion 11 is connected to a central portion in the left-right direction of a lower portion of the dash panel 20.

A front cast member 50 is provided in the front portion of the automobile 1. For example, the front cast member 50 includes a right front side frame (vehicle frame) 60, a left front side frame (vehicle frame) 70, and a coupling portion 80 that couples the right front side frame 60 and the left front side frame 70.

A rear portion of the left front side frame 70 and a rear portion of the right front side frame 60 may be fixed to the dash panel 20. A rear portion of the coupling portion 80 may be fixed to front portions of the dash panel 20 and the tunnel portion 11.

When the right front side frame 60, the left front side frame 70, and the coupling portion 80 are fixed to the dash panel 20 or the tunnel portion 11, any of various fixing methods, such as fixing by welding, fastening fixing using a fastening member (including, a self-piercing rivet or the like, for example), can be applied. Of these fixing methods, any one of the fixing methods may be employed, or any two or more of the fixing methods may be used in combination.

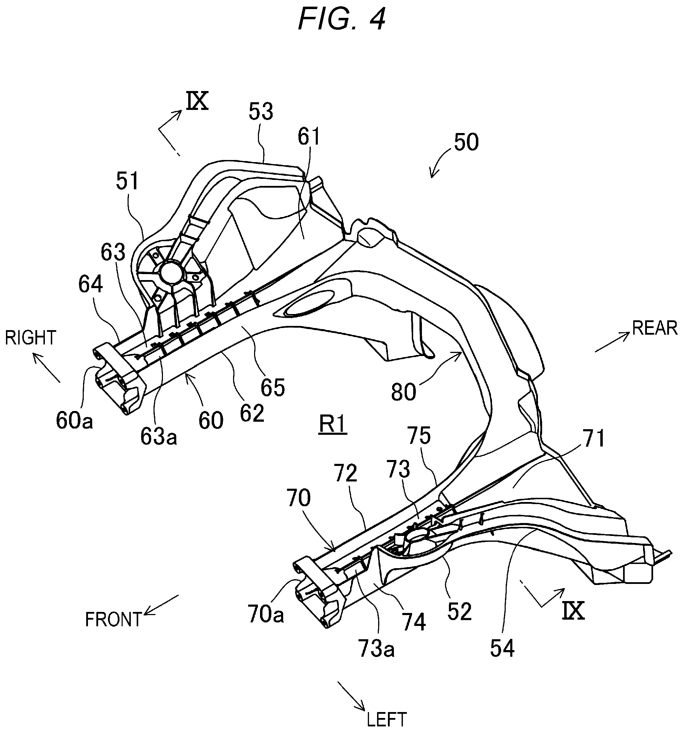

The right front side frame 60, the left front side frame 70, and the coupling portion 80 are integrally or unitarily molded by casting. For example, as illustrated in FIG. 4, the right front side frame 60, the left front side frame 70, and the coupling portion 80 constitute the front cast member 50 as one member or a single member.

A material of the front cast member 50 can be the aluminum alloy, for example. When the material of the front cast member 50 is the aluminum alloy, the front cast member 50 can be manufactured by an aluminum die casting method. The right front side frame 60 and the left front side frame 70 may separately be cast.

The right front side frame 60 is provided on the right side of a center in the left-right direction (or a vehicle width direction) in the front portion of the automobile 1, and extends in the front-rear direction. The left front side frame 70 is provided on the left side of the center in the left-right direction in the front portion of the automobile 1, and extends in the front-rear direction.

A predetermined direction in the invention may be a direction that corresponds to the front-rear direction in the present embodiment. Thus, the body structure A may include, as vehicle frames arranged with the predetermined direction being the front-rear direction, the right front side frame 60 and the left front side frame 70 on the right side and the left side in a body front portion, respectively.

For example, the right front side frame 60 and the left front side frame 70 are arranged at the same height. Since the rear portion of the right front side frame 60 and the rear portion of the left front side frame 70 are coupled by the coupling portion 80 that extends in the left-right direction, the right front side frame 60 and the left front side frame 70 are spaced apart from each other in the left-right direction. Accordingly, the body structure A includes the coupling portion 80 that extends from the rear portion of the right front side frame 60 to the rear portion of the left front side frame 70. The front space R1 is provided between the right front side frame 60 and the left front side frame 70.

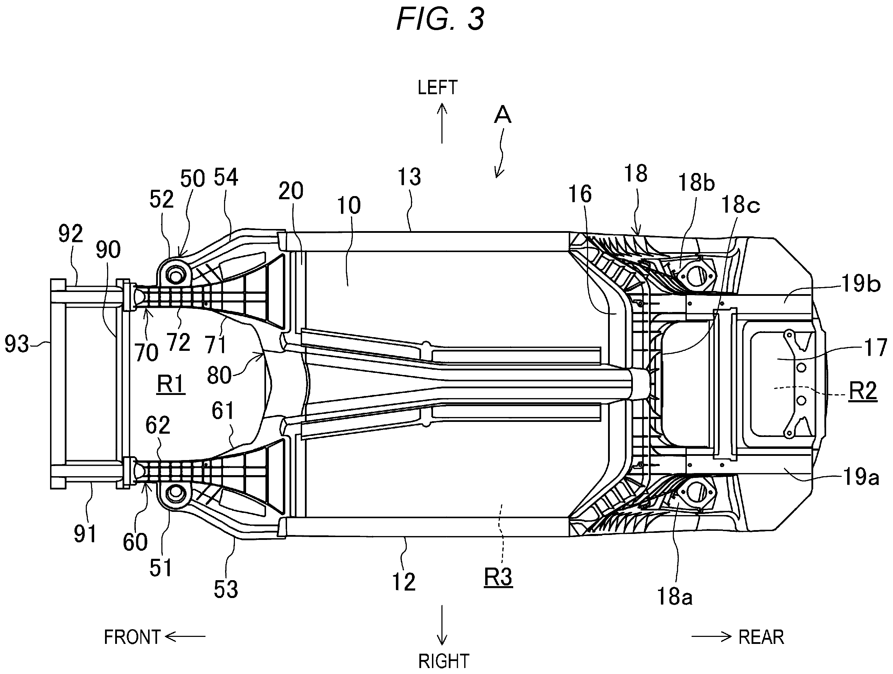

As illustrated in FIG. 2 and FIG. 3, a front cross member 90 that extends in the left-right direction may be provided in a front portion of the front cast member 50 of the automobile 1. As illustrated in FIG. 4 to FIG. 6, in a front portion of the right front side frame 60, a right concave portion 60a to which the front cross member 90 is fitted may be formed to be recessed rearward. In addition, as illustrated in FIG. 4, in a front portion of the left front side frame 70, a left concave portion 70a to which the front cross member 90 is fitted may be formed to be recessed rearward.

A right portion of the front cross member 90 may be fixed to the front portion of the right front side frame 60 in a state of being fitted to the right concave portion 60a of the right front side frame 60, and a left portion of the front cross member 90 may be fixed to the front portion of the left front side frame 70 in a state of being fitted to the left concave portion 70a of the left front side frame 70. Accordingly, the front portion of the right front side frame 60 and the front portion of the left front side frame 70 are coupled by the front cross member 90. In a front view, the front cross member 90 may be positioned in a manner to overlap the front portion of the right front side frame 60 and the front portion of the left front side frame 70.

For example, a right crash can 91 and a left crash can 92 are provided in front of the front cross member 90 of the automobile 1. The right crash can 91 has a cylindrical shape that is fixed to the right portion of the front cross member 90 and extends forward from the right portion of the front cross member 90. The left crash can 92 has a cylindrical shape that is fixed to the left portion of the front cross member 90 and extends forward from the left portion of the front cross member 90. In the front view, the right crash can 91 and the left crash can 92 are positioned in a manner to overlap the front portion of the right front side frame 60 and the front portion of the left front side frame 70, respectively.

A bumper reinforcing member 93 that extends in the left-right direction may be provided in front of the right crash can 91 and the left crash can 92 of the automobile 1. A right portion of the bumper reinforcing member 93 is fixed to a front portion of the right crash can 91, and a left portion of the bumper reinforcing member 93 is fixed to a front portion of the left crash can 92. Accordingly, the front portion of the right crash can 91 and the front portion of the left crash can 92 are coupled by the bumper reinforcing member 93.

In the front view, the bumper reinforcing member 93 may be positioned in a manner to overlap the front portion of the right front side frame 60 and the front portion of the left front side frame 70. However, the front cross member 90, the right crash can 91, the left crash can 92, and the bumper reinforcing member 93 may be provided as necessary and are not essential members to the invention.

The right front side frame 60 and the left front side frame 70 may have a bilaterally symmetrical structure. For example, when an imaginary line that extends in an up-down direction through the center of the automobile 1 in the left-right direction is set as a center of symmetry, the left front side frame 70 is line-symmetric with the right front side frame 60, and the right front side frame 60 is line-symmetric with the left front side frame 70. Since the right front side frame 60 and the left front side frame 70 have the bilaterally symmetrical structure as described above, a detailed description will hereinafter be made on a structure of the right front side frame 60, and the left front side frame 70 will be described briefly.

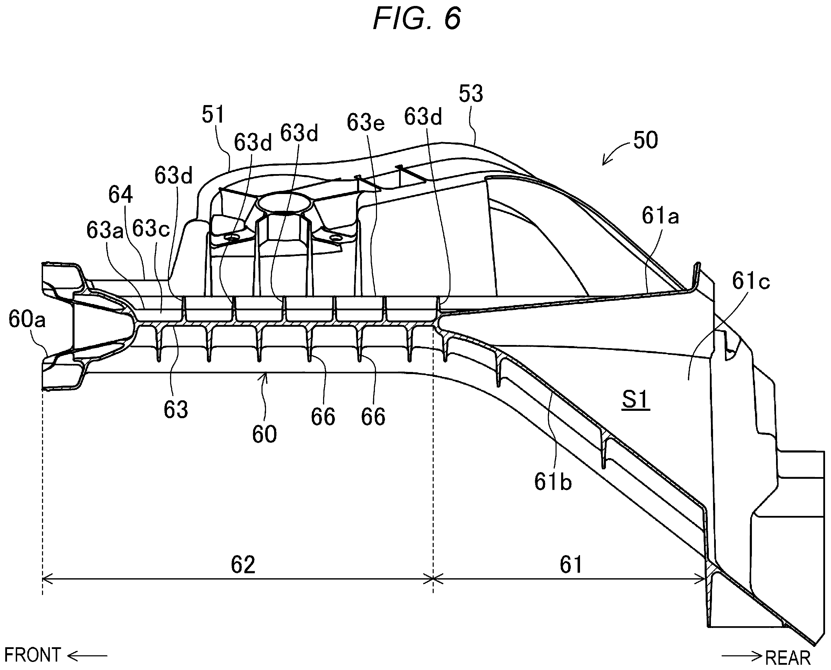

FIG. 6 is a cross-sectional view that is taken along a plane that extends in the up-down direction (or the vertical direction) through a straight line extending in a longitudinal direction (the front-rear direction) of the right front side frame 60. As illustrated in this FIG. 6, the right front side frame 60 can be divided into a rear portion 61 and a front portion 62.

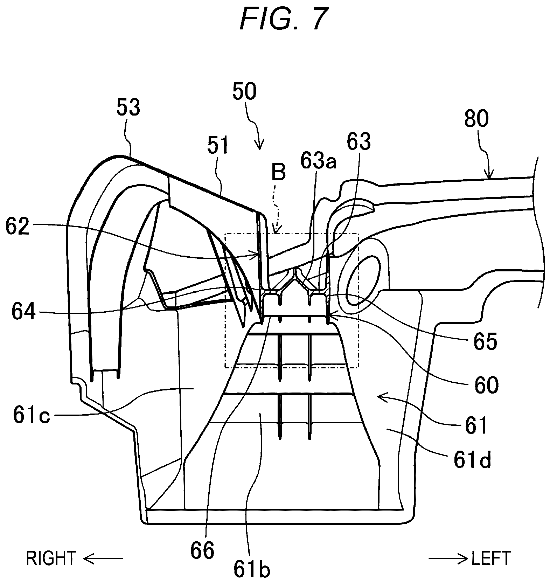

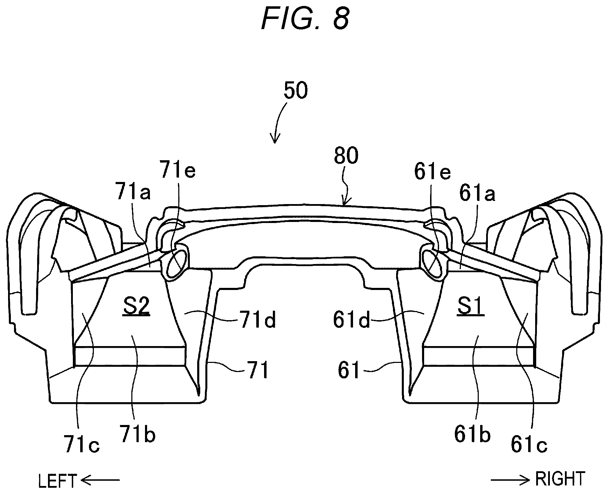

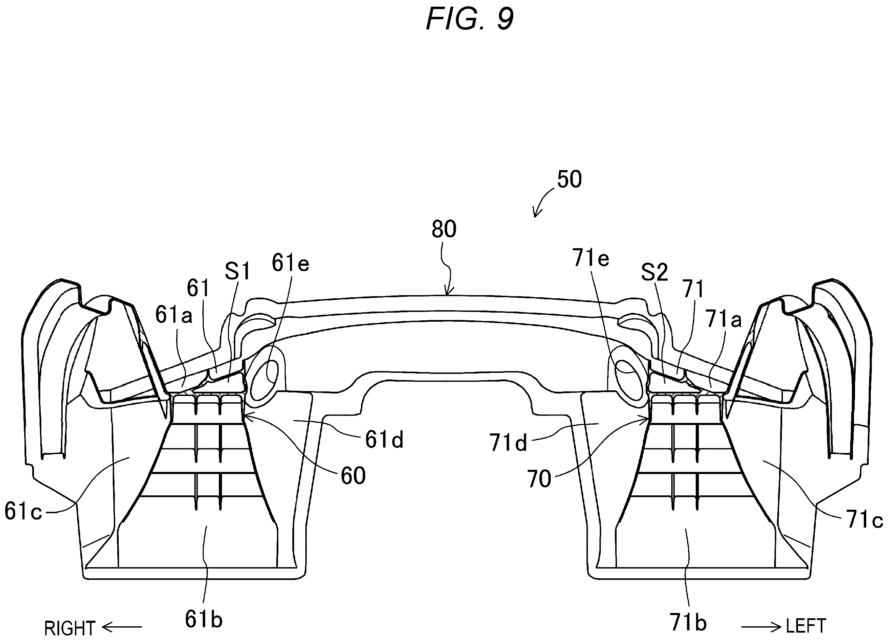

The rear portion 61 may be a cone-shaped portion that has a hollow portion S1 formed in a hollow shape. Meanwhile, as also illustrated in FIG. 7, the front portion 62 may be a portion that has a cross-sectional shape close to an H-shape. As illustrated in FIG. 4, the left front side frame 70 may also include: a rear portion (cone-shaped portion) 71 that has a hollow portion S2 (illustrated in FIG. 8 and FIG. 9) formed in a hollow shape; and a front portion 72 that has a cross-sectional shape close to an H-shape.

As a mold (not illustrated) for molding the front cast member 50, for example, a mold that is opened and/or closed in the up-down direction can be used. In this case, since the hollow portions S1, S2 are opened rearward, they are portions difficult to be molded by the mold. Thus, when the hollow portions S1, S2 are molded, a slide mold (not illustrated) that is movable in the front-rear direction of the front cast member 50 may be set.

As illustrated in FIG. 6, the rear portion 61 of the right front side frame 60 may be opened rearward. FIG. 8 is a rear view of the front cast member 50 in which the rear portion 61 is viewed from behind, that is, an open side.

For example, as illustrated in FIG. 6 and FIG. 8, the rear portion 61 has an upper wall portion 61a, a lower wall portion 61b, an outer wall portion 61c, and an inner wall portion 61d. The upper wall portion 61a, the lower wall portion 61b, the outer wall portion 61c, and the inner wall portion 61d form the hollow portion S1 that is opened rearward.

The upper wall portion 61a constitutes an upper portion of the rear portion 61 and extends in the front-rear direction and the left-right direction. The lower wall portion 61b constitutes a lower portion of the rear portion 61, extends in the front-rear direction and the left-right direction, and may be inclined or curved in a manner to be positioned downward toward the rear. As a result, a dimension (or a length) in the up-down direction of the hollow portion S1 of the rear portion 61 becomes longer toward the rear. Dimensions in the up-down direction of the outer wall portion 61c and the inner wall portion 61d become longer toward the rear so as to correspond to the inclined shape or the curved shape of the lower wall portion 61b.

The outer wall portion 61c and the inner wall portion 61d extend in the front-rear direction and the up-down direction. The outer wall portion 61c is formed to be positioned outward (rightward) in the vehicle width direction toward the rear. The inner wall portion 61d is formed to be positioned inward (leftward) in the vehicle width direction toward the rear. As a result, the rear portion 61 of the right front side frame 60 may be formed such that a dimension in the left-right direction becomes longer toward the rear.

Just as described, a shape of a vertical cross section that is orthogonal to the front-rear direction of the rear portion 61 may become the largest in a rear portion of the rear portion 61. In this way, the rear portion 61 becomes a cone-shaped portion in which the vertical cross section that is orthogonal to the front-rear direction is gradually enlarged toward the rear. Since a portion with the largest vertical cross section is fixed to the dash panel 20, it is possible to increase fixing strength or rigidity of the right front side frame 60 to the dash panel 20.

Similar to the rear portion 61 of the right front side frame 60, the rear portion 71 of the left front side frame 70 may also have an upper wall portion 71a, a lower wall portion 71b, an outer wall portion 71c, and an inner wall portion 71d. Accordingly, a portion with the largest vertical cross section of the left front side frame 70 can be fixed to the dash panel 20, and it is thus possible to increase fixing strength and/or rigidity of the left front side frame 70 to the dash panel 20.

A right portion of the coupling portion 80 may be integrated with the inner wall portion (left portion) 61d in the rear portion of the rear portion 61 of the right front side frame 60. A left portion of the coupling portion 80 may be integrated with the inner wall portion (right portion) 71d in a rear portion of the rear portion 71 of the left front side frame 70. Accordingly, the coupling portion 80 is formed to continuously extend from the left portion in the rear portion of the rear portion 61 of the right front side frame 60 to the right portion in the rear portion of the rear portion 71 of the left front side frame 70.

By employing such a coupling structure using the coupling portion 80, it is possible to couple portions of the right front side frame 60 and the left front side frame 70 with a narrow space in the left-right direction. Thus, it is possible to reduce a length of the coupling portion 80 and thus to sufficiently increase strength and/or rigidity at the time of coupling.

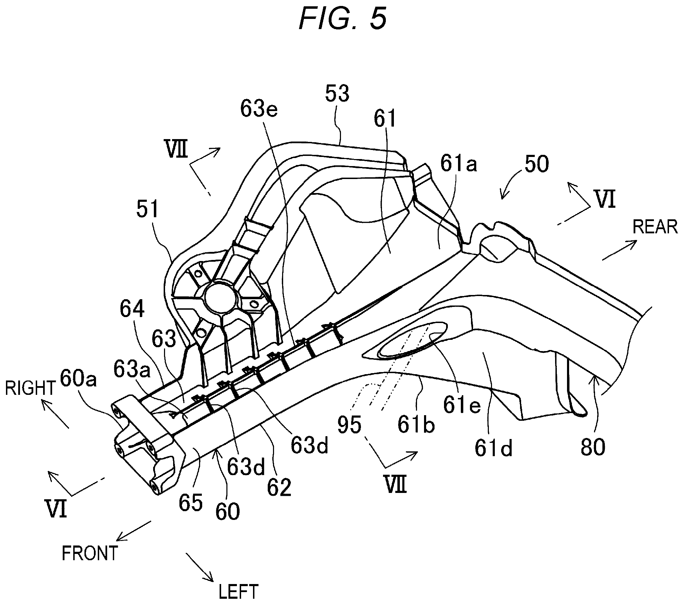

As illustrated in FIG. 5, the inner wall portion 61d of the right front side frame 60 may be formed with an insertion hole 61e through which a steering shaft 95 (only a part of which is indicated by imaginary lines) that is arranged to extend from the cabin R3 to the front space R1 is inserted. That is, the steering shaft 95 may be disposed to pass through the dash panel 20 and pass through the inner wall portion 61d of the right front side frame 60.

A steering wheel (not illustrated) may be attached to a portion on the cabin R3 side of the steering shaft 95 while a steering device (not illustrated) may be coupled to a portion on the front space R1 side of the steering shaft 95.

For example, in the present embodiment, since a cross-sectional area of the rear portion 61 of the right front side frame 60 is increased toward the rear, the inner wall portion 61d is disposed at a position through which the steering shaft 95 passes. Accordingly, by forming the insertion hole 61e in the inner wall portion 61d, it is possible to increase the strength by enlarging the cross-sectional area of the rear portion 61 of the right front side frame 60 while maintaining a layout (a position and an angle of the steering shaft 95) of the steering shaft 95 that can realize an intended driving position.

As illustrated in FIG. 8, an insertion hole 71e through which a steering shaft (not illustrated) can be inserted may also be formed on the right side. This is to correspond to the left-hand drive vehicle.

The insertion holes 61e, 71e are not limited to the illustrated positions, and may be provided in a manner to correspond to the position of the steering shaft 95. The insertion holes 61e, 71e may be omitted.

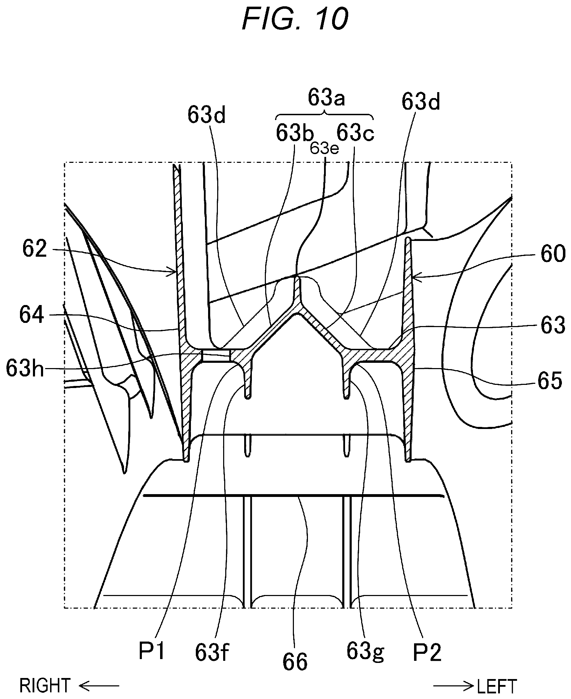

Next, a description will be made on a structure of the front portion 62 of the right front side frame 60. As illustrated in an enlarged manner in FIG. 10, when viewed along the front-rear direction, the front portion 62 has a horizontal plate portion 63, a right vertical plate portion (first vertical plate portion) 64, and a left vertical plate portion (second vertical plate portion) 65.

The horizontal plate portion 63 may extend forward in the front-rear direction from a front portion of the rear portion 61 and may also extend in the left-right direction. For example, a width direction of the horizontal plate portion 63 is the left-right direction, a longitudinal direction of the horizontal plate portion 63 is the front-rear direction, and a thickness direction of the horizontal plate portion 63 is the up-down direction.

Particularly, the right vertical plate portion 64 continues from a right end portion (one end portion in the width direction) of the horizontal plate portion 63 and extends to both sides in the thickness direction of the horizontal plate portion 63. The left vertical plate portion 65 continues from a left end portion (the other end portion in the width direction) of the horizontal plate portion 63 and extends to both sides in the thickness direction of the horizontal plate portion 63. Accordingly, the right vertical plate portion 64 and the left vertical plate portion 65 extend upward from an upper surface of the horizontal plate portion 63 and also extend downward from a lower surface of the horizontal plate portion 63. In this way, the front portion 62 has the cross-sectional shape close to the H-shape.

The right vertical plate portion 64 and the left vertical plate portion 65 may be parallel to each other or may not be parallel to each other. Particularly, since a draft angle of the mold is generally set, the right vertical plate portion 64 and the left vertical plate portion 65 become thinner toward the upper side and the lower side, but may each have uniform thickness from an upper portion to a lower portion by omitting the draft angle. Rear portions of the right vertical plate portion 64 and the left vertical plate portion 65 continue to the front portion of the rear portion 61.

The horizontal plate portion 63 has a bulging portion 63a that bulges in the thickness direction of the horizontal plate portion 63 and extends in the front-rear direction. The bulging portion 63a is located e.g., in a central portion in the left-right direction of the horizontal plate portion 63, and may bulge upward as one direction of the thickness direction of the horizontal plate portion 63. The bulging portion 63a may bulge downward as the other direction of the thickness direction of the horizontal plate portion 63.

The bulging portion 63a may have a right inclined portion 63b and a left inclined portion 63c. The right inclined portion 63b is inclined with respect to the horizontal plate portion 63 in a manner to approach the right end portion (the one end portion in the width direction) of the horizontal plate portion 63 toward a proximal end portion in a bulging direction of the bulging portion 63a, in other words, is an inclined plate portion that is inclined downward toward the right. The left inclined portion 63c is inclined with respect to the horizontal plate portion 63 in a manner to approach the left end portion (the other end portion in the width direction) of the horizontal plate portion 63 toward the proximal end portion in the bulging direction of the bulging portion 63a, in other words, is an inclined plate portion that is inclined downward toward the left.

A left edge portion of the right inclined portion 63b and a right edge portion of the left inclined portion 63c may be connected in a central portion in the left-right direction of the front portion 62. A connected portion of both of the inclined portions 63b, 63c is a distal end portion in the bulging direction of the bulging portion 63a and forms a ridge line. Thus, the bulging portion 63a has a shape whose height is gradually increased toward the distal end portion from the proximal end portion in the bulging direction.

The bulging portion 63a may be integrally or unitarily molded with a rib 63d that protrudes in the bulging direction and extends in the left-right direction (width direction) of the horizontal plate portion 63. The rib 63d may be provided on an upper surface of the right inclined portion 63b and an upper surface of the left inclined portion 63c.

The rib 63d that is provided on the upper surface of the right inclined portion 63b may continuously extend from a portion on the right side of the right inclined portion 63b in the horizontal plate portion 63 to the left edge portion of the right inclined portion 63b. The rib 63d that is provided on the upper surface of the left inclined portion 63c may continuously extend from a portion on the left side of the left inclined portion 63c in the horizontal plate portion 63 to the right edge portion of the left inclined portion 63c. The rib 63d that is provided on the upper surface of the right inclined portion 63b and the rib 63d that is provided on the upper surface of the left inclined portion 63c are integrated continuously in the left-right direction.

For example, as illustrated in FIG. 6, the plural ribs 63d are provided at intervals in a longitudinal direction of the front portion 62. The rearmost rib 63d may be located in a front end portion of the rear portion 61.

The foremost rib 63d is located in the vicinity of the right concave portion 60a. The plural ribs 63d may be provided at equally-spaced intervals in the front-rear direction, or may be provided at unequally-spaced intervals. In addition, all the plural ribs 63d may have the same protruding height, or only some may be higher than the others.

For example, as illustrated in FIG. 10, the distal end portion in the bulging direction of the bulging portion 63a is integrally or unitarily molded with a distal end side bead portion 63e that protrudes upward in the bulging direction and extends in the front-rear direction. The distal end side bead portion 63e is provided in the connected portion between the right inclined portion 63b and the left inclined portion 63c.

The distal end side bead portion 63e may couple the plural ribs 63d. In this way, the plural ribs 63d that extend in the left-right direction and the distal end side bead portion 63e that extends in the front-rear direction are integrated to obtain a reinforcing structure.

At an intersection point P1 between the right inclined portion 63b and the horizontal plate portion 63, a right proximal end side bead portion 63f that protrudes in an opposite direction (down direction) to the bulging direction and extends in the front-rear direction may be integrally or unitarily molded. The right proximal end side bead portion 63f may be displaced to the right side of the distal end side bead portion 63e.

In addition, at an intersection point P2 between the left inclined portion 63c and the horizontal plate portion 63, a left proximal end side bead portion 63g that protrudes in the opposite direction (down direction) to the bulging direction and extends in the front-rear direction may be integrally or unitarily molded. The left proximal end side bead portion 63g may be displaced to the left side of the distal end side bead portion 63e. Thus, in a plan view, the distal end side bead portion 63e is positioned between the right proximal end side bead portion 63f and the left proximal end side bead portion 63g.

Rear portions of the right proximal end side bead portion 63f and the left proximal end side bead portion 63g may extend to the front end portion of the rear portion 61 of the right front side frame 60. Accordingly, the right proximal end side bead portion 63f and the left proximal end side bead portion 63g may continuously extend from the rear portion 61 of the right front side frame 60 to the vicinity of a front end portion of the front portion 62. However, the right proximal end side bead portion 63f and the left proximal end side bead portion 63g may be provided as necessary, and one of them may be omitted, or both of them may be omitted.

For example, in the horizontal plate portion 63, one or more water drain holes 63h (only illustrated in FIG. 10) for discharging water that is accumulated on the upper surface of the horizontal plate portion 63 to the lower side of the horizontal plate portion 63 is formed in a manner to penetrate the horizontal plate portion 63 in the thickness direction. The number of the water drain hole 63h is not particularly limited, and only one thereof may be formed in a low portion of the horizontal plate portion 63.

When the upper surface of the horizontal plate portion 63 is partitioned by the plural ribs 63d as in the present embodiment, the water drain hole 63h may be formed between each adjacent pair of the rib 63d and the rib 63d in the front-rear direction. For example, when rainwater or water at the time of car washing is accumulated on the upper surface of the horizontal plate portion 63, water that has been accumulated on the upper surface of the horizontal plate portion 63 is smoothly drained to the lower side of the horizontal plate portion 63 through the water drain hole 63h.

A shape of the water drain hole 63h may be circular, but may be elliptical or polygonal. In the present embodiment, the case where the water drain hole 63h is formed on the right side of the bulging portion 63a in the horizontal plate portion 63 is described. However, the water drain hole 63h may be formed on the left side of the bulging portion 63a in the horizontal plate portion 63.

One or more lower ribs 66 may be formed in the front portion 62. For example, the lower rib 66 protrudes downward from the lower surface of the horizontal plate portion 63 and/or an inner surface of the bulging portion 63a, and extends in the left-right direction.

A right end portion of the lower rib 66 is continuously integrated with the right vertical plate portion 64. A left end portion of the lower rib 66 is continuously integrated with the left vertical plate portion 65.

For example, as illustrated in FIG. 6, the plural lower ribs 66 are provided at intervals in the front-rear direction. The lower portion of the lower rib 66 extends below the right proximal end side bead portion 63f and the left proximal end side bead portion 63g, but is located above lower end portions of the right vertical plate portion 64 and the left vertical plate portion 65.

As illustrated in FIG. 4, when viewed along the front-rear direction, the front portion 72 of the left front side frame 70 also has a horizontal plate portion 73, a right vertical plate portion (first vertical plate portion) 74, and a left vertical plate portion (second vertical plate portion) 75. A bulging portion 73a is formed in the horizontal plate portion 73. Ribs and bead portions may be provided in the same manner as the right side.

For example, in the event of a frontal collision, an impact load that is directed rearward is input to the right front side frame 60. The right front side frame 60 that has received the impact load is buckled and deformed to prevent bending thereof. In this way, the impact load can be received by the right front side frame 60. In the present embodiment, a configuration for buckling and deforming, in particular, the front portion 62 of the right front side frame 60 is employed. Hereinafter, a structure thereof will be described in detail.

First, the front portion 62 of the right front side frame 60 may have the cross-sectional shape close to the H-shape by the horizontal plate portion 63, the right vertical plate portion 64, and the left vertical plate portion 65. In addition to this, a centroid position may also be devised.

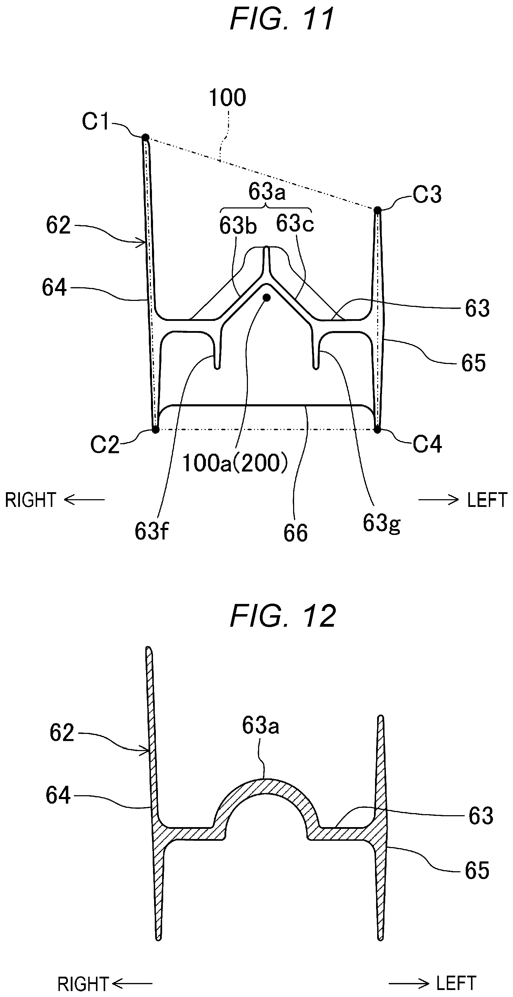

For example, as illustrated in FIG. 11, a rectangle 100 (indicated by imaginary lines) is assumed that is formed by connecting an upper end portion of the right vertical plate portion 64 (one end portion of the right vertical plate portion 64, indicated by a point C1), the lower end portion of the right vertical plate portion 64 (the other end portion of the right vertical plate portion 64, indicated by a point C2), an upper end portion of the left vertical plate portion 65 (one end portion of the left vertical plate portion 65, indicated by a point C3), and the lower end portion of the left vertical plate portion 65 (the other end portion of the left vertical plate portion 65, indicated by a point C4). A center of the rectangle 100 is denoted by a reference sign 100a. In FIG. 11, the water drain hole is not illustrated.

Then, formation positions of the horizontal plate portion 63 and the bulging portion 63a may be set such that a centroid 200 of the cross section of the front portion 62 of the right front side frame 60 in the direction orthogonal to the front-rear direction is located at the center 100a of the rectangle 100 that can be obtained by connecting the point C1, the point C2, the point C3, and the point C4. The centroid 200 of the cross section of the front portion 62 of the right front side frame 60 in the direction orthogonal to the front-rear direction moves upward when the horizontal plate portion 63 and the bulging portion 63a move upward, for example, and moves downward when the horizontal plate portion 63 and the bulging portion 63a move downward. Particularly, when the formation position of the bulging portion 63a moves to the right, the centroid 200 also moves to the right, and when the formation position of the bulging portion 63a moves to the left, the centroid 200 also moves to the left. Just as described, the position of the centroid 200 is set such that the centroid 200 matches the center 100a of the rectangle 100.

By making the center 100a of the rectangle 100 match the centroid 200, the front portion 62 of the right front side frame 60 can be buckled and deformed when the impact load in the front-rear direction is input to the front portion 62. In the left front side frame 70, a centroid position of a cross section may be set in the same manner.

For example, as illustrated in FIG. 2 and FIG. 3, the front cast member 50 has a right suspension tower portion 51 and a left suspension tower portion 52. The right suspension tower portion 51 and the left suspension tower portion 52 are portions to each of which an upper portion of a suspension device (not illustrated) is attached.

The right suspension tower portion 51 may be located above the right front side frame 60 and may be connected to an upper portion of the front portion 62 of the right front side frame 60. A rear portion of the right suspension tower portion 51 may be connected to the rear portion of the right front side frame 60 by a left connection portion 53.

The left suspension tower portion 52 may be located above the left front side frame 70 and may be connected to an upper portion of the front portion 72 of the left front side frame 70. A rear portion of the left suspension tower portion 52 may be connected to the rear portion of the left front side frame 70 by a right connection portion 54.

### (Modified Examples of Embodiment)

FIG. 12 is a cross-sectional view of the front portion 62 of the right front side frame 60 according to a first modified example of the embodiment in the invention. As in the first modified example, the bulging portion 63a may be formed to have an arc-shaped cross section e.g., in a cross-sectional view in the front-rear direction.

Particularly, an outer surface (upper surface) of the bulging portion 63a is curved to be positioned upward toward a center portion in the left-right direction, and is formed by a curved surface as a whole. The bulging portion 63a may have a semicircular arc shape or a fan shape.

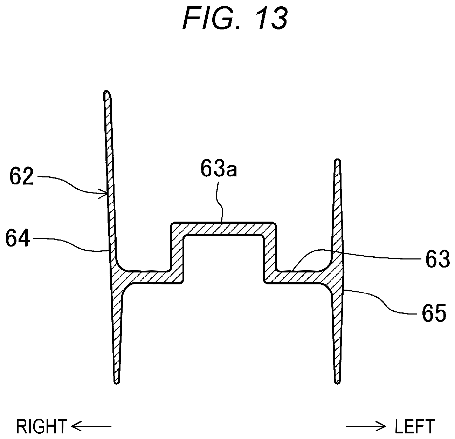

FIG. 13 is a cross-sectional view of the front portion 62 of the right front side frame 60 according to a second modified example of the embodiment in the invention. As in the second modified example, the bulging portion 63a may be formed to have a rectangular cross section e.g., in a cross-sectional view in the front-rear direction.

Particularly, each of a right end portion and a left end portion of the bulging portion 63a is formed in a plate shape that extends upward. An upper end portion of the bulging portion 63a extends in the left-right direction.

A dimension (or a length) in the up-down direction of the bulging portion 63a may be the same as a dimension in the left-right direction, or one of them may be longer than the other. Particularly, the dimension in the left-right direction of the bulging portion 63a may be set to be longer toward the lower side.

Although not illustrated, the plural bulging portions 63a may be arranged side by side in the left-right direction. In this case, the bulging portions 63a having the different cross-sectional shapes may be arranged side by side in the left-right direction.

### (Operational Effect of Embodiment)

As it has been described so far, according to the present embodiment, since the right front side frame 60 and the left front side frame 70 are integrally or unitarily molded by casting, it is possible to reduce the number of components of the front cast member 50 while improving body rigidity.

Since each of the rear portion 61 of the right front side frame 60 and the rear portion 71 of the left front side frame 70 is the cone-shaped portion, deformation of the rear portions 61, 71 is suppressed at the time of being applied with the impact load from the front. As a result, load can be received by the rear portions 61, 71.

Particularly, each of the front portion 62 of the right front side frame 60 and the front portion 72 of the left front side frame 70 has the cross section close to the H-shape and thus is less likely to be bent when being applied with the impact load. In addition to this, for example, since the bulging portion 63a that bulges in the up-down direction is formed in the horizontal plate portion 63 of the right front side frame 60, the bulging portion 63a acts like a hollow rib. As a result, compared to a case where the horizontal plate portion 63 is flat, the right front side frame 60 obtains improved rigidity and thus is less likely to be bent. From the above, when the impact load is applied to the right front side frame 60 and the left front side frame 70 in an extending direction of the frames 60, 70, the right front side frame 60 and the left front side frame 70 are less likely to be bent and can receive the impact load.

The above-described embodiment is merely illustrative in all respects, and should not be construed in a limited manner. The invention can also be applied to the right rear frame 19a and the left rear frame 19b, for example. In addition, the invention can also be applied to the right side sill 12 and the left side sill 13. Furthermore, the invention can also be applied to the right hinge pillar 12a and the left hinge pillar 13a. Although not illustrated, the invention can also be applied to various cross members, beams, reinforcing members, and the like.

### [Industrial Applicability]

As it has been described so far, the body structure according to the present disclosure can be applied to the automobile, for example.

### [Reference Signs List]

1: automobile
20: dash panel
60: right front side frame (vehicle frame)
61e: insertion hole
63: horizontal plate portion
63a: bulging portion
63b: right inclined portion
63d: rib
63e: distal end side bead portion
63f: right proximal end side bead portion
63h: water drain hole
64: right vertical plate portion (first vertical plate portion)
65: left vertical plate portion (second vertical plate portion)
70: left front side frame (vehicle frame)
80: coupling portion
95: steering shaft
200: centroid
A: body structure

## Claims

1. A body structure (A) comprising a vehicle frame (60, 70) that is integrally or unitarily molded by casting and extends in a predetermined direction, wherein
when the vehicle frame (60, 70) is viewed along the predetermined direction, the vehicle frame (60, 70) has: a horizontal plate portion (63, 73); a first vertical plate portion (64, 74) that continues from one end portion in a width direction of the horizontal plate portion (63, 73) and extends to both sides in a thickness direction of the horizontal plate portion (63, 73); and a second vertical plate portion (65, 75) that continues from another end portion in the width direction of the horizontal plate portion (63, 73) and extends to the both sides in the thickness direction of the horizontal plate portion (63, 73), and
the horizontal plate portion (63, 73) has a bulging portion (63a) that bulges in the thickness direction of the horizontal plate portion (63, 73) and extends in the predetermined direction.

2. The body structure (A) according to claim 1, wherein
the bulging portion (63a) is integrally or unitarily molded with a rib (63d) that protrudes in a bulging direction and extends in the width direction of the horizontal plate portion (63, 73).

3. The body structure (A) according to claim 1 or 2, wherein
a distal end portion in a bulging direction of the bulging portion (63a) is integrally or unitarily molded with a distal end side bead portion (63e) that protrudes in the bulging direction and extends in the predetermined direction.

4. The body structure (A) according to any one of the preceding claims, wherein
the bulging portion (63a) has an inclined portion (63b, 63c) that is inclined and extends with respect to the horizontal plate portion (63, 73) in a manner to approach the one end portion in the width direction of the horizontal plate portion (63, 73) toward a proximal end portion in a bulging direction, and
at an intersection point (P1, P2) between the inclined portion (63b, 63c) and the horizontal plate portion (63, 73), a proximal end side bead portion (63f, 63g) that protrudes in an opposite direction to the bulging direction and extends in the predetermined direction is integrally or unitarily molded.

5. The body structure (A) according to any one of the preceding claims, wherein
the vehicle frame (60, 70) is arranged with the predetermined direction being a vehicle front-rear direction on each of a right side and a left side of a body front portion,
the body structure (A) further comprises a coupling portion that extends from a rear portion of the vehicle frame (60, 70) on the right side to a rear portion of the vehicle frame (60, 70) on the left side,
the vehicle frame (60) on the right side, the vehicle frame (70) on the left side, and the coupling portion (80) are integrally or unitarily molded by casting.

6. The body structure (A) according to claim 5, wherein
the vehicle frame (60) on the right side and the vehicle frame (70) on the left side are each formed so that a dimension in a left-right direction becomes longer toward rear, and
the coupling portion (80) is formed to extend from a left portion in the rear portion of the vehicle frame (60) on the right side to a right portion in the rear portion of the vehicle frame (70) on the left side.

7. The body structure (A) according to any one of the preceding claims, wherein
in the horizontal plate portion (63, 73), a water drain hole (63h) configured to discharge water that is accumulated on an upper surface of the horizontal plate portion (63, 73) to a lower side of the horizontal plate portion (63, 73) is formed in a manner to penetrate the horizontal plate portion (63, 73) in the thickness direction.

8. The body structure (A) according to any one of the preceding claims referring to claim 5, further comprising
a dash panel (20) that divides a cabin (R3) and a front space (R1) on a body front side of the cabin (R3), wherein
the rear portion of the vehicle frame (60) on the right side and the rear portion of the vehicle frame (70) on the left side are fixed to the dash panel (20),
the rear portion of at least one of the vehicle frame (60) on the right side or the vehicle frame (70) on the left side has a hollow portion (S1, S2) that is opened rearward, and
an inner wall portion (61d, 71d) in a vehicle width direction of the hollow portion (S1, S2) is formed with an insertion hole (61e, 71e) through which a steering shaft (95) that is arranged to extend from the cabin (R3) to the front space (R1) is inserted.

9. The body structure (A) according to any one of the preceding claims, wherein
a centroid of a cross section of the vehicle frame (60, 70) in a direction orthogonal to the predetermined direction is located at a center of a rectangle that can be obtained by connecting one end portion of the first vertical plate portion (64, 74), another end portion of the first vertical plate portion (64, 74), one end portion of the second vertical plate portion (65, 75), and another end portion of the second vertical plate portion (65, 75).

10. The body structure (A) according to any one of claims 1 to 3, wherein bulging portion (63a) has an arc-shaped cross section or a rectangular cross section.

11. The body structure (A) according to any one of the preceding claims, further comprising a rib (66) that protrudes from the horizontal plate portion (63) and/or an inner surface of the bulging portion (63a), and extends in the width direction.

12. The body structure (A) according to any one of the preceding claims, further comprising a suspension tower portion (51, 52) connected to the vehicle frame (60, 70).

13. A vehicle or an automobile (1) comprising the body structure (A) according to any one of the preceding claims.

14. A mold configured to mold the body structure (A) according to any one of claims 1 to 12.

15. A method of molding a body structure (A), the method comprising integrally or unitarily casting a vehicle frame (60, 70) that extends in a predetermined direction, wherein
when the vehicle frame (60, 70) is viewed along the predetermined direction, the vehicle frame (60, 70) has: a horizontal plate portion (63, 73); a first vertical plate portion (64, 74) that continues from one end portion in a width direction of the horizontal plate portion (63, 73) and extends to both sides in a thickness direction of the horizontal plate portion (63, 73); and a second vertical plate portion (65, 75) that continues from another end portion in the width direction of the horizontal plate portion (63, 73) and extends to the both sides in the thickness direction of the horizontal plate portion (63, 73), and
the horizontal plate portion (63, 73) has a bulging portion (63a) that bulges in the thickness direction of the horizontal plate portion (63, 73) and extends in the predetermined direction.
